# EUROPÄISCHE PATENTSCHRIFT

(11) **EP 3 056 823 B1**
(45) Veröffentlichungstag und Bekanntmachung des Hinweises auf die Patenterteilung: **01.03.2023**
(21) Anmeldenummer: 16153163.7
(22) Anmeldetag: 28.01.2016
(51) Int. Cl.: F24D 3/14

(54) **DÄMMSTOFFMATTE UND WÄRMETAUSCHERANORDNUNG**
INSULATION MAT AND HEAT EXCHANGER ASSEMBLY
PANNEAU ISOLANT ET SYSTEME D'ECHANGEUR THERMIQUE

(30) Priorität: 12.02.2015 DE 202015100694 U; 25.02.2015 DE 202015100914 U
(43) Veröffentlichungstag der Anmeldung: 17.08.2016
(73) Patentinhaber: Uponor Innovation AB, 73061 Virsbo (SE)
(72) Erfinder: Lipinski, Johann, 22926 Ahrensburg (DE); Wiechern, Ulrich, 23845 Seth (DE)
(74) Vertreter: Epping - Hermann - Fischer

(56) Entgegenhaltungen:
- EP-A2- 0 059 252
- EP-A2- 1 122 373
- WO-A1-93/00506
- WO-A1-02/099220
- AT-B- 312 885
- DE-A1- 2 940 261
- DE-U1- 7 815 984
- DE-U1- 8 134 009
- DE-U1- 20 105 940
- DE-U1- 20 210 919
- DE-U1- 29 708 455
- DE-U1- 29 908 056
- DE-U1-202008 001 296
- DE-U1-202010 009 431
- DE-U1-202012 102 478

## Beschreibung

Die Erfindung betrifft eine Dämmstoffmatte, insbesondere zur Dämmung eines Fußbodens, umfassend eine Dämmschicht aus einem Fasermaterial und eine Befestigungsschicht zur Befestigung einer Rohranordnung. Des Weiteren betrifft die Erfindung eine Wärmetauscheranordnung mit einer Dämmstoffmatte und einer auf einer Befestigungsschicht der Dämmstoffmatte angeordneten Rohranordnung.

Aus dem Stand der Technik sind eine Vielzahl von Anordnungen und Vorrichtungen zum Herstellen von in einen Fußboden integrierte Wärmetauscheranordnungen bekannt. Derartige Anordnungen dienen insbesondere zum Heizen beziehungsweise Kühlen des darüber befindlichen Raums.

Beispielsweise ist aus der EP 0 346 529 A1 eine Rohranordnung mit Befestigungsmitteln zur Befestigung eines Rohres an einer Unterlage bekannt. Die Rohranordnung ist auf einer Unterlage mit Hilfe eines Haftverschlusses fest, aber lösbar befestigt. Ein Schlingenteil des Haftverschlusses ist an einer Flachseite der Unterlage angebracht und wird an vorgegebenen Markierungen mit ringförmigen Haltegliedern eines Halteteils verbunden, die an dem Rohr der Rohranordnung angebracht sind.

Des Weiteren ist aus der EP 1 248 047 A2 ein Halteclip aus Kunststoff zum Festlegen von Rohren, insbesondere von Fußbodenheizungsrohren, auf einer Wärme- und/oder Trittschalldämmungsunterlage aus Kunststoff bekannt.

Beide bekannten Anordnungen ermöglichen eine besonders einfache und flexible Befestigung von Rohranordnungen auf einer darunter liegenden Dämmschicht. Vor der eigentlichen Befestigung der Rohre sind jedoch jeweils Vorarbeiten erforderlich. Insbesondere muss auf der Baustelle an dem jeweils verwendeten Dämmmaterial eine Unterlage beziehungsweise eine Deckschicht befestigt werden, die zur Befestigung der eigentlichen Rohranordnung dient. Das Dämmmaterial selbst oder die zusätzliche Deckschicht umfassen dabei typischerweise aufgeschäumte Materialien, die eine mögliche Entsorgung erschweren oder gesundheitsbedenkliche chemische Komponenten enthalten.

Aus der DE 202 10 919 U1 ist eine Gebäudewand mit einem Stützgerüst, bestehend aus zumindest zwei im Abstand zueinander angeordneten Profilen bekannt. Zwischen zwei Profilen ist eine Dämmschicht aus zumindest einer den Raum zwischen den Profilen vollständig ausfüllenden Dämmmatte aus Mineralfasern, insbesondere aus Steinwolle, ausgebildet.

Aus der DE 29 40 261 A1 ist eine Großflächenheizung bekannt, bestehend aus mehreren Montageplatten mit einer Isolierschicht und einer auf der Oberfläche der Isolierschicht angeordneten, vorzugsweise aus Kunststoff-Hartfolie bestehenden Dampfsperrschicht und auf deren Oberfläche mittels Rohrschellen angebrachten Heizrohren.

Aus der DE 297 08 455 U1 ist eine Dämmplatte mit aufkaschiertem Klettvlies bekannt.

Aufgabe der vorliegenden Erfindung ist es, verbesserte Vorrichtungen und Verfahren zur Herstellung derartiger Wärmetauscheranordnungen zu offenbaren. Bevorzugt soll dabei der baustellenseitig erforderliche Aufwand reduziert und der Einsatz von gesundheitsbedenklichen oder umweltschädlichen Stoffen soweit wie möglich vermieden werden.

Gemäß der Erfindung wird eine Dämmstoffmatte, insbesondere zur Dämmung eines Fußbodens, umfassend eine Dämmschicht aus einem ersten Fasermaterial und eine Befestigungsschicht zur Befestigung einer Rohranordnung beschrieben. Dabei ist die Befestigungsschicht flexibel, umfasst ein zweites Material und ist an die Dämmschicht geheftet oder mit der Dämmschicht vernäht, verdrillt oder verflochten. Die Befestigungsschicht ist als Klettvlies zur lösbaren Befestigung von Klettelementen ausgestaltet.

Bei dem ersten Fasermaterial kann es sich beispielsweise um ökologisch unbedenkliche Materialien, wie Mineralwolle, Steinwolle oder Holzwolle handeln, die bereits bei der Herstellung mit einer flexiblen Befestigungsschicht aus einem zweiten Material durch Heften, Nähen, Verdrillen oder Flechten verbunden wurde. Das zweite Material ist ein Klettvlies. Auf diese Weise kann auf die zusätzliche Befestigung einer festen Unterlage, beispielsweise aus einem aufgeschäumten Material, auf der Baustelle verzichtet werden. Die genannten Befestigungstechniken eignen sich insbesondere zur Massenproduktion auf Seiten des Herstellers des Dämmmaterials. Auch die sonst übliche Verklebung der Befestigungsschicht mit den damit verbundenen Klebstoffen kann entfallen, wodurch die Schadstoffbelastung abnimmt.

Die flexible Befestigungsschicht ist als Klettvlies zur lösbaren Befestigung von Klettelementen ausgestaltet. Eine derartige Befestigungsschicht erlaubt eine besonders einfache Befestigung von entsprechend vorbereiteten Rohren durch Andrücken von mit den Rohren verbundenen Klettelementen auf die Befestigungsschicht der Dämmstoffmatte.

In einer Ausgestaltung ist die Dämmstoffmatte zur Aufnahme von mit jeweils mindestens einem Haken versehenen Halteklammern ausgestaltet, so dass die Haken der Halteklammern in die Dämmschicht eindringen und sich mit der flexiblen Befestigungsschicht verhaken können. Auch eine derartige Anordnung gestattet eine besonders einfache Befestigung von Rohren, durch Aufpressen bzw. Tackern der Halteklammern auf die Rohre.

Bevorzugt ist das erste Fasermaterial brandhemmend oder unbrennbar und die Dämmstoffmatte frei von zusätzlichen Flammschutzmitteln.

In wenigstens einer Ausgestaltung sind die Dämmschicht und die Befestigungsschicht an einer Mehrzahl von punkt- oder linienförmigen Verbindungsstellen miteinander verbunden.

In wenigstens einer Ausgestaltung ist zwischen der Dämmschicht und der Befestigungsschicht eine weitere flexible Schicht, insbesondere eine Feuchtigkeitssperre angeordnet, wobei die weitere flexible Schicht und die Befestigungsschicht gemeinsam an die Dämmschicht geheftet oder mit der Dämmschicht vernäht sind.

In wenigstens einer Ausgestaltung besteht die Dämmschicht aus einer Mehrzahl von nebeneinander angeordneten Dämmstoffstreifen, die über die Befestigungsschicht miteinander verbunden sind. Eine derartige Dämmstoffmatte kann unabhängig von der Härte der Dämmschicht mittels der Befestigungsschicht zu Ballen aufgerollt werden, was die Herstellung, den Transport und die Verlegung der entsprechenden Dämmstoffmatten vereinfacht. Alternativ können auch zwei oder mehr feste Platten über die Befestigungsschicht als sogenannte Klappplatten miteinander verbunden werden.

In wenigstens einer Ausgestaltung steht die Befestigungsschicht in wenigstens einem Randbereich der Dämmstoffplatte über die Dämmschicht über, wobei der überstehende Randbereich dazu eingerichtet ist, eine Klettverbindung mit einer benachbarten, gleichartigen Dämmstoffmatte zu bilden. Auf diese Weise können benachbarte Dämmstoffmatten besonders einfach und zeitsparend unter Verwendung der vorhandenen Befestigungsschicht aneinander befestigt werden, um eine Spaltbildung in der Dämmschicht zu vermeiden.

Gemäß einer Weiterbildung der Erfindung wird eine Wärmetauscheranordnung mit einer Dämmstoffmatte, umfassend eine Dämmschicht aus einem ersten Fasermaterial und einer an dem ersten Fasermaterial der Dämmschicht befestigten flexiblen Befestigungsschicht offenbart. Die Wärmetauscheranordnung umfasst des Weiteren wenigstens eine auf der flexiblen Befestigungsschicht angeordnete Rohranordnung zum Durchleiten eines Mediums zum Kühlen und/oder Heizen, wobei die Rohranordnung mittels Verbindungselementen direkt mit der flexiblen Befestigungsschicht verbunden ist. Die Befestigungsschicht umfasst ein zweites Material und ist an einer Mehrzahl von punkt- oder linienförmigen Verbindungsstellen an die Dämmschicht geheftet oder mit der Dämmschicht vernäht, verdrillt oder verflochten. Die flexible Befestigungsschicht ist als Klettvlies und die Verbindungselemente sind als die Rohranordnung zumindest abschnittsweise umgebende Klettelemente ausgestaltet, so dass die Klettelemente durch Aufdrücken der Rohranordnung eine lösbare Klettverbindung mit dem Klettvlies eingehen.

Eine derartige Wärmetauscheranordnung eignet sich insbesondere zur Herstellung einer Fußbodenklimatisierung und ermöglicht im Wesentlichen die oben genannten Vorteile.

Zur Herstellung der Dämmstoffmatte werden auf Seiten des Herstellers des Dämmmaterials folgende Schritte durchgeführt:
- Herstellen einer platten- oder bahnförmigen Dämmschicht aus einem Fasermaterial, insbesondere Mineral-, Steinwolle oder Holzwolle,
- Aufbringen einer flexiblen Befestigungsschicht aus einem zweiten Material, wobei das zweite Material als Klettvlies ausgestaltet ist, und
- Heften, Vernähen, Verdrillen oder Verflechten der Befestigungsschicht mit der Dämmschicht.

Zur Herstellung einer Wärmetauscheranordnung werden auf der Baustelle folgende Schritte durchgeführt:
- Verlegen wenigstens einer Dämmstoffmatte auf einem Untergrund, wobei die Befestigungsschicht auf einer dem Untergrund abgewandten Seite angeordnet wird,
- Aufbringen einer Rohranordnung direkt auf die Befestigungsschicht der wenigstens einen Dämmstoffmatte,
- Befestigen der Rohranordnung an der Befestigungsschicht, insbesondere durch mit der Rohranordnung verbundenen Klettelementen oder Halteklammern, und
- Vergießen der Rohranordnung mit einem Füllmaterial, insbesondere Estrich.

Weitere vorteilhafte Ausgestaltungen der Erfindung sind in den angehängten Ansprüchen sowie der nachfolgenden ausführlichen Beschreibung von Ausführungsbeispielen offenbart.

Die Ausführungsbeispiele werden anhand der angehängten Figuren im Detail beschrieben. Dabei werden gleiche Bezugszeichen für gleiche oder gleichartige Komponenten unterschiedlicher Ausführungsbeispiele verwendet. Unterschiedliche Instanzen gleicher Komponenten sind durch alphabetische Suffixe gekennzeichnet.

In den Figuren zeigen:
- Figur 1: eine Wärmetauscheranordnung gemäß einer ersten Ausgestaltung der Erfindung,
- Figur 2: eine Wärmetauscheranordnung, die nicht unter den Schutzbereich der Erfindung fällt, und
- Figur 3: die Herstellung einer Dämmstoffmatte gemäß einer Ausgestaltung der Erfindung.

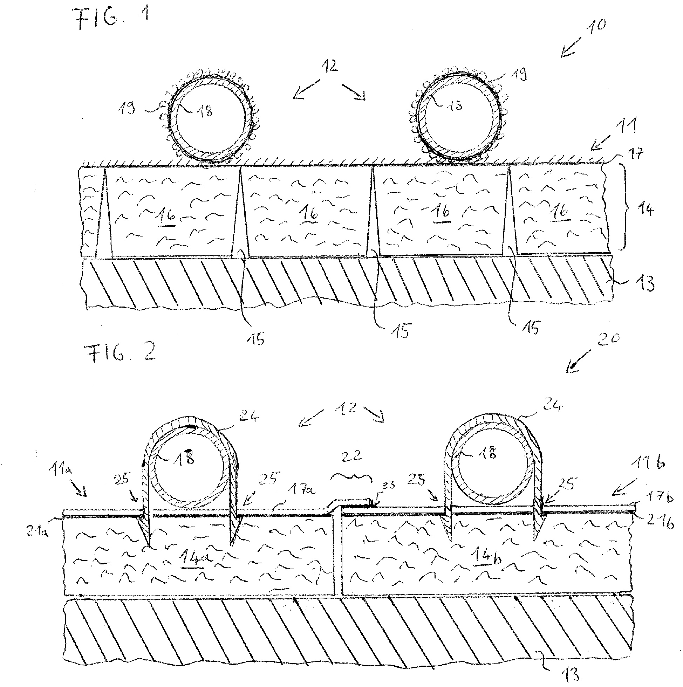

Figur 1 zeigt schematisch einen Querschnitt durch eine erste Wärmetauscheranordnung 10. Die erste Wärmetauscheranordnung 10 umfasst eine Dämmstoffmatte 11 sowie eine direkt auf einer Oberseite der Dämmstoffmatte 11 angeordnete Rohranordnung 12.

Die erste Wärmetauscheranordnung 10 liegt im Ausführungsbeispiel auf einem festen Untergrund 13, beispielsweise der Rohdecke eines Gebäudes, auf.

Die Dämmstoffmatte 11 gemäß dem Ausführungsbeispiel nach Figur 1 umfasst eine Dämmschicht 14 aus einem Fasermaterial. Im Ausführungsbeispiel handelt es sich bei dem Fasermaterial um Mineralwolle. Mineralwolle besitzt als Bau- und Dämmstoff zahlreiche Vorteile. Insbesondere enthält Mineralwolle keine giftigen Lösungsmittel und ist daher ohne weiteres deponierbar. Des Weiteren ist Mineralwolle unbrennbar oder zumindest brandhemmend, so dass auf den Einsatz spezieller Flammschutzmittel verzichtet werden kann. Darüber hinaus besitzt Mineralwolle ein sehr gutes Isolierverhalten, so dass einschlägige Standards zur Wärme- und/oder Schallisolierung von Wohngebäuden eingehalten werden können.

Im Ausführungsbeispiel ist die Dämmschicht 14 zwischen 5 und 28 Millimeter dick. Sie kann herstellerseitig in Bahnen mit einer Breite von beispielsweise 80 cm hergestellt werden. Zum besseren Transport langer Bahnen weist die Dämmstoffschicht 14 im dargestellten Ausführungsbeispiel eine Mehrzahl von in der Figur übertrieben dargestellten, zueinander parallelen Einschnitten 15 auf, die sich im Wesentlich entlang der gesamten Dicke und Breite der Dämmschicht 14 erstrecken. Beispielsweise beträgt der Abstand zwischen den einzelnen Einschnitten 15 zwischen 10 und 20 cm. Die dazwischen liegenden Dämmstoffstreifen 16 der Dämmschicht 14 sind über eine flexible Befestigungsschicht 17 miteinander verbunden.

Bei der flexiblen Befestigungsschicht 17 handelt es sich im Ausführungsbeispiel gemäß Figur 1 ein zweites Fasermaterial, wobei das Fasermaterial als Klettvlies ausgestaltet ist. Die flexible Befestigungsschicht 17 ist mit den darunter liegenden Dämmstoffstreifen 16 der Dämmschicht 14 vernäht. Wegen der guten Verbindbarkeit der beiden Fasermaterialien kann ein verhältnismäßig dünnes oder einfaches Klettvlies Verwendung finden. Das Vernähen der Dämmschicht 14 und der Befestigungsschicht 17 erfolgt dabei bereits bei Herstellung der Dämmstoffmatte 11. Bevorzugt erfolgt die Befestigung bevor die Einschnitte 15 in die Dämmschicht 14 eingebracht werden. Auf diese Weise ist eine einfache, großtechnische Befestigung der Befestigungsschicht 17 an der Dämmschicht 14 möglich. Zudem kann die Befestigungsschicht 17 zum Aufrollen der Dämmstoffstreifen 16 der Dämmschicht 14 verwendet werden. Die Rohranordnung 12 umfasst mehrere Rohre 18, die im Ausführungsbeispiel abschnittsweise mit Klettelementen 19 umwickelt sind. Die Klettelemente 19 können beispielsweise an den Rohren 18 durch Kleben oder sonstige Befestigungstechniken befestigt werden. Nach Verlegen der Dämmstoffmatte 11 auf dem Untergrund 13 kann die Rohranordnung 12 durch einfaches Aufdrücken der Rohre 18 mit den daran befestigten Klettelementen 19 auf dem Klettvlies der flexiblen Befestigungsschicht 17 befestigt werden. Somit sind auf Seiten der Baustelle keinerlei weitere Vorbereitungsmaßnahmen erforderlich. Durch die Klettverbindung zwischen den Klettelementen 19 und der Befestigungsschicht 17 werden die Rohre 18 sicher an der Dämmstoffmatte 11 gehalten. Dementsprechend kann die Rohranordnung 12 in einem nachfolgenden Schritt mit einem Estrich vergossen werden, ohne dass die Gefahr besteht, dass sich die einzelnen Rohre 18 von der Oberseite der Dämmstoffmatte 11 lösen und nach oben durch die Estrichschicht hinaus ragen.

Figur 2 zeigt eine zweite Wärmetauscheranordnung 20, die nicht unter den Schutzbereich der Ansprüche fällt. Die zweite Wärmetauscheranordnung 20 umfasst zwei Dämmstoffmatten 11a und 11b sowie eine darauf angeordnete Rohranordnung 12.

Die Dämmstoffmatten 11a und 11b umfassen jeweils eine Dämmschicht 14a bzw. 14b, eine darauf angeordnete, als Feuchtigkeitssperre wirkende Folie 21a bzw. 21b und eine darauf angeordnete Befestigungsschicht 17a bzw. 17b. Bei den Befestigungsschichten 17a und 17b handelt es sich um ein relativ festes Gewebematerial. Alternativ kann es sich jedoch auch um einen Filz oder ein anderes geeignetes Material, insbesondere um ein Fasermaterial, handeln. Beispielsweise kann auch das oben bezüglich dem ersten Ausführungsbeispiel beschriebe Klettvlies als Befestigungsschicht 17a und 17b der nachfolgend genannten Befestigungsanordnung dienen. Bei einer Befestigung der Rohranordnung 12 mittels Halteklammern wie nachfolgend beschriebene ist auch die Verwendung anderer, hinreichend fester Materialalien wie etwas verstärkten Kunststofffolien als Befestigungsschicht möglich.

Die Dämmschichten 14a und 14b bestehen aus Steinwolle. Steinwolle ist ein relativ festes Material, so dass die einzelnen Dämmstoffmatten 11a und 11b als Plattenmaterial geliefert und verlegt werden können. Zum Sichern der benachbarten Dämmstoffmatten 11a und 11b gegen ein Verrutschen überlappt die Befestigungsschicht 17a der ersten Dämmstoffmatte 11a die Befestigungsschicht 17b der zweiten Dämmstoffmatte 11b in einem Randbereich 22. In dem Randbereich 22 ist an einer der Befestigungsschichten 17a oder 17b der Dämmstoffmatten 11a bzw. 11b ein Klettband 23 angeordnet, das sich entweder direkt mit dem Material der anderen Befestigungsschicht 17b bzw. 17a oder mit einem entsprechenden Gegenklettelement der jeweils anderen Dämmstoffmatte 11b bzw. 11a verhakt.

Die Rohranordnung 12 gemäß Figur 2 umfasst eine Mehrzahl von Rohren 18, die mittels Halteklammern 24 mit der Befestigungsschicht 17a oder 17b und der darunter liegenden Dämmschicht 14a bzw. 14b verbunden sind. Hierzu weisen die Halteklammern 24 an ihren Enden jeweils Widerhaken 25 auf, die die Befestigungsschicht 17a bzw. 17b durchstoßen, in die Dämmschicht 14a bzw. 14b eindringen und hinter der Befestigungsschicht 17a bzw. 17b verrasten oder verhaken und so die Rohranordnung 12 sicher auf der Oberseite der Dämmstoffmatten 11a bzw. 11b halten.

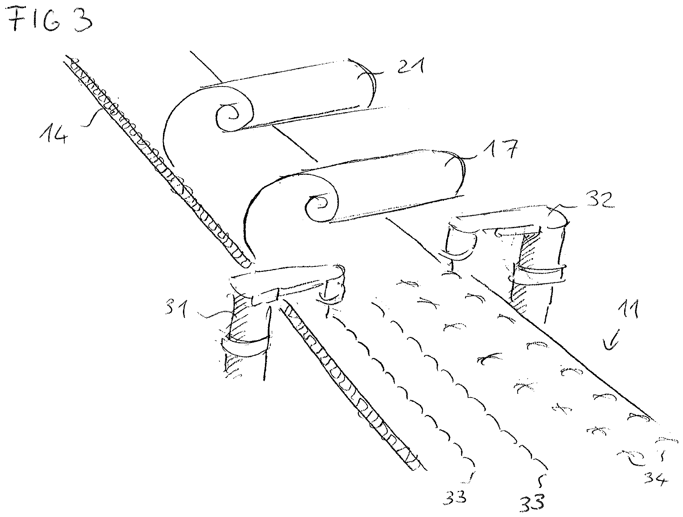

Auch die Befestigungsschichten 17a und 17b, die Folie 21a bzw. 21b und die Dämmschicht 14a bzw. 14b der zweiten Wärmetauscheranordnung 20 werden bereits bei der Herstellung der Dämmstoffmatten 11a bzw. 11b miteinander verbunden. Beispielsweise werden die genannten Schichten durch den Hersteller der Dämmstoffmatten 11a und 11b an einer Vielzahl von Punkten maschinell aneinander geheftet (in der Figur 2 nicht dargestellt). Alternativ ist auch eine flächige Verklebung der Befestigungsschicht 17 möglich. Dies bietet sich insbesondere bei der Verwendung von verstärkten Kunststofffolien als Befestigungsschicht 17 an. Figur 3 zeigt schematisch die Herstellung einer Dämmstoffmatte 11. Über einer maschinell hergestellten Bahn einer Dämmschicht 14 werden im dargestellten Ausführungsbeispiel zwei flexible Schichten, insbesondere eine als Feuchtigkeitssperre wirkende Folie 21 und eine flexible Befestigungsschicht 17 in Form eines Klettvlieses aufgebracht. In einer alternativen, nicht dargestellten Ausgestaltung wird lediglich eine einzelne Befestigungsschicht 17, beispielsweise nur ein Klettvlies, auf die Dämmschicht 14 aufgebracht. Nachfolgend durchläuft die Anordnung, umfassend die Dämmschicht 14, gegebenenfalls die Folie 21 und die Befestigungsschicht 17, eine Nähmaschine 31 und/oder eine Heftmaschine 32. Im linken unteren Teil der Figur 3 ist beispielsweise das Vernähen der drei Schichten durch die Nähmaschine 31 entlang im Wesentlichen geradliniger Nähte 33 dargestellt. Als alternative Befestigungsmethode ist im rechten Teil der Figur 3 das Heften der Schichten durch die Heftmaschine 32 an einzelnen Befestigungspunkten 34 dargestellt.

Neben dem Vernähen und Heften bieten sich auch zahlreiche weitere, insbesondere textile Befestigungsmethoden an, um die Fasern der Dämmschicht 14 und der darüber befindlichen Befestigungsschicht 17 dauerhaft miteinander zu verbinden. Insbesondere bei Dämmstoffmatten 11 ohne zusätzliche Folie 21 können die Fasern der Schichten 14 und 17 auch direkt miteinander verdrillt oder verflochten werden. Dies bietet sich insbesondere dann an, wenn die verwendete flexible Befestigungsschicht 17 selbst ein hinreichendes Hindernis zum Begrenzen einer Feuchtigkeit für die darunter liegende Dämmschicht 14 darstellt.

Insbesondere beim Einsatz von Mineral- oder Steinwolle als Dämmmaterial kann auf den Einsatz weiterer Flammschutzmittel weitgehend verzichtet werden. Darüber hinaus bietet sich die Verwendung von natürlichen Materialien für ein vereinfachtes Recycling an.

### Bezugszeichenliste

- 10: (erste) Wärmetauscheranordnung
- 11: Dämmstoffmatte
- 12: Rohranordnung
- 13: Untergrund
- 14: Dämmschicht
- 15: Einschnitt
- 16: Dämmstoffstreifen
- 17: Befestigungsschicht
- 18: Rohr
- 19: Klettelement

- 20: (zweite) Wärmetauscheranordnung
- 21: Folie
- 22: Randbereich
- 23: Klettband
- 24: Halteklammer
- 25: Widerhaken

- 31: Nähmaschine
- 32: Heftmaschine
- 33: Naht
- 34: Befestigungspunkt

## Patentansprüche

1. Dämmstoffmatte (11), insbesondere zur Dämmung eines Fußbodens, umfassend eine Dämmschicht (14) aus einem ersten Fasermaterial und eine Befestigungsschicht (17) zur Befestigung einer Rohranordnung (12), wobei die Befestigungsschicht (17) flexibel ist, ein zweites Material umfasst und an die Dämmschicht (14) geheftet oder mit der Dämmschicht (14) vernäht, verdrillt oder verflochten ist, wobei die Befestigungsschicht (17) als Klettvlies zur lösbaren Befestigung von Klettelementen (19) ausgestaltet ist.

2. Dämmstoffmatte (11) nach Anspruch 1, wobei die Dämmschicht (14) im Wesentlichen aus Mineralwolle, Steinwolle und/oder Holzwolle besteht.

3. Dämmstoffmatte (11) nach einem der Ansprüche 1 bis 2, wobei die Dämmstoffmatte (11) zur Aufnahme von mit jeweils mindestens einem Haken versehenen Halteklammern (24) ausgestaltet ist, so dass die Haken der Halteklammern (24) in die Dämmschicht (14) eindringen und sich mit der flexiblen Befestigungsschicht (17) verhaken können.

4. Dämmstoffmatte (11) nach einem der Ansprüche 1 bis 3, wobei das erste Fasermaterial brandhemmend oder unbrennbar ist und die Dämmstoffmatte (11) frei von zusätzlichen Flammschutzmitteln ist.

5. Dämmstoffmatte (11) nach einem der Ansprüche 1 bis 4, wobei die Dämmschicht (14) und die Befestigungsschicht (17) an einer Mehrzahl von punkt- oder linienförmigen Verbindungsstellen miteinander verbunden sind.

6. Dämmstoffmatte (11) nach einem der Ansprüche 1 bis 5, wobei zwischen der Dämmschicht (14) und der Befestigungsschicht (17) eine weitere flexible Schicht, insbesondere eine Feuchtigkeitssperre, angeordnet ist, wobei die weitere flexible Schicht und die Befestigungsschicht (17) gemeinsam an die Dämmschicht (14) geheftet oder mit der Dämmschicht (14) vernäht sind.

7. Dämmstoffmatte (11) nach einem der Ansprüche 1 bis 6, wobei die Dämmschicht (14) aus einer Mehrzahl von nebeneinander angeordneten Dämmstoffstreifen (16) besteht, die über die Befestigungsschicht (17) miteinander verbunden sind.

8. Dämmstoffmatte (11) nach einem der Ansprüche 1 bis 7, wobei die Befestigungsschicht (17) in wenigstens einem Randbereich (22) der Dämmstoffmatte (11) über die Dämmschicht (14) übersteht, wobei der überstehende Randbereich (22) dazu eingerichtet ist, eine Klettverbindung mit einer benachbarten, gleichartigen Dämmstoffmatte (11) zu bilden.

9. Wärmetauscheranordnung (10, 20), umfassend:
- eine Dämmstoffmatte (11), umfassend eine Dämmschicht (14) aus einem ersten Fasermaterial und eine an dem ersten Fasermaterial der Dämmschicht (14) befestigten, flexiblen Befestigungsschicht (17); und
- wenigstens eine auf der flexiblen Befestigungsschicht (17) angeordnete Rohranordnung (12) zum Durchleiten eines Mediums zum Kühlen und/oder Heizen, wobei die Rohranordnung (12) mittels Verbindungselementen direkt mit der flexiblen Befestigungsschicht (17) verbunden ist, wobei
-- die Befestigungsschicht (17) ein zweites Material umfasst und an einer Mehrzahl von punkt- oder linienförmigen Verbindungsstellen an die Dämmschicht (14) geheftet oder mit der Dämmschicht (14) vernäht, verdrillt oder verflochten ist, und
-- die flexible Befestigungsschicht (17) als Klettvlies und die Verbindungselemente als die Rohranordnung (12) zumindest abschnittsweise umgebende Klettelemente (19) ausgestaltet sind, so dass die Klettelemente (19) durch Aufdrücken der Rohranordnung (12) eine lösbare Klettverbindung mit dem Klettvlies eingehen.

10. Wärmetauscheranordnung (10, 20) nach Anspruch 9, wobei die Dämmschicht (14) im Wesentlichen aus Mineralwolle, Steinwolle und/oder Holzwolle besteht.

11. Wärmetauscheranordnung (20) nach einem der Ansprüche 9 bis 10, wobei die flexible Befestigungsschicht (17) eine größere Festigkeit aufweist als die Dämmschicht (14), und die Verbindungselemente als Halteklammern (24) mit mindestens einem Haken ausgestaltet sind, wobei die Haken in die Dämmschicht (14) eindringen und hinter der Befestigungsschicht (17) verhakt sind.

12. Wärmetauscheranordnung (20) nach einem der Ansprüche 9 bis 11, wobei zwischen der Dämmschicht (14) und der flexiblen Befestigungsschicht (17) eine weitere flexible Schicht, insbesondere eine Feuchtigkeitssperre, angeordnet ist, wobei die Dämmschicht (14), die weitere flexible Schicht und die flexible Befestigungsschicht (17) an einer Mehrzahl von punkt- oder linienförmigen Verbindungsstellen miteinander verbunden sind.

## Claims

1. An insulation mat (11), in particular for insulating a floor, comprising an insulation layer (14) made of a first fiber material and a fastening layer (17) for fastening a pipe assembly (12), wherein the fastening layer (17) is flexible, comprises a second material and is tacked to the insulation layer (14) or sewn, twisted or braided with the insulation layer (14), the fastening layer (17) being designed as a hook-and-loop nonwoven fabric for detachably fastening hook-and-loop elements (19).

2. The insulation mat (11) according to claim 1, wherein the insulation layer (14) consists essentially of mineral wool, rock wool and/or wood wool.

3. The insulation mat (11) according to any of claims 1 to 2, wherein the insulation mat (11) is designed to receive retaining clips (24) each provided with at least one hook, so that the hooks of the retaining clips (24) can penetrate the insulation layer (14) and get caught with the flexible fastening layer (17).

4. The insulation mat (11) according to any of claims 1 to 3, wherein the first fiber material is fire retardant or non-combustible and the insulation mat (11) is free of additional flame retardants.

5. The insulation mat (11) according to any of claims 1 to 4, wherein the insulation layer (14) and the fastening layer (17) are joined to each other at a plurality of punctual or linear connection points.

6. The insulation mat (11) according to any of claims 1 to 5, wherein a further flexible layer, in particular a moisture barrier, is arranged between the insulation layer (14) and the fastening layer (17), the further flexible layer and the fastening layer (17) being jointly stitched or sewn to the insulation layer (14).

7. The insulation mat (11) according to any of claims 1 to 6, wherein the insulation layer (14) consists of a plurality of insulation strips (16) which are arranged side by side and connected to one another via the fastening layer (17) .

8. The insulation mat (11) according to any of claims 1 to 7, wherein the fastening layer (17) protrudes beyond the insulation layer (14) in at least one edge region (22) of the insulation mat (11), the protruding edge region (22) being adapted to form a hook-and-loop connection with an adjacent insulation mat (11) of the same type.

9. A heat exchanger assembly (10, 20), comprising:
an insulation mat (11) comprising an insulation layer (14) made of a first fiber material and a flexible fastening layer (17) fastened to the first fiber material of the insulation layer (14); and
at least one pipe assembly (12) arranged on the flexible fastening layer (17) and intended for passing a medium for cooling and/or heating, the pipe assembly (12) being directly connected to the flexible fastening layer (17) by means of connecting elements, wherein
-- the fastening layer (17) comprises a second material which is tacked to the insulation layer (14) or sewn, twisted or braided with the insulation layer (14) at a plurality of punctual or linear connection points, and
-- the flexible fastening layer (17) is designed as a hook-and-loop nonwoven fabric, and the connecting elements are designed as hook-and-loop elements (19) surrounding the pipe assembly (12) at least in sections, so that the hook-and-loop elements (19) form a releasable hook-and-loop connection with the hook-and-loop nonwoven fabric by pressing on the pipe assembly (12).

10. The heat exchanger assembly (10, 20) according to claim 9, wherein the insulation layer (14) consists essentially of mineral wool, rock wool and/or wood wool.

11. The heat exchanger assembly (20) according to any of claims 9 to 10, wherein the flexible fastening layer (17) has a greater strength than the insulation layer (14), and the connecting elements are designed as retaining clips (24) having at least one hook, the hooks penetrating the insulation layer (14) and getting caught behind the fastening layer (17).

12. The heat exchanger assembly (20) according to any of claims 9 to 11, wherein a further flexible layer, in particular a moisture barrier, is arranged between the insulation layer (14) and the flexible fastening layer (17), the insulation layer (14), the further flexible layer and the flexible fastening layer (17) being connected to one another at a plurality of punctual or linear connection points.

## Revendications

1. Panneau isolant (11), en particulier pour l'isolation d'un plancher, comprenant une couche isolante (14) composée d'un premier matériau de fibre et une couche de fixation (17) pour la fixation à un agencement de tubes (12), sachant que la couche de fixation (17) est flexible, comprend un deuxième matériau et est agrafée à la couche isolante (14) ou cousue, torsadée ou tressée avec la couche isolante (14), sachant que la couche de fixation (17) est constituée comme voile autoagrippant pour la fixation détachable d'éléments autoagrippants (19) .

2. Panneau isolant (11) selon la revendication 1, sachant que la couche isolante (14) est composée essentiellement de laine minérale, de laine de roche et/ou de laine de bois.

3. Panneau isolant (11) selon l'une des revendications 1 à 2, sachant que le panneau isolant (11) est constitué pour la réception de clips de maintien (24) pourvus respectivement d'au moins un crochet de telle sorte que les crochets des clips de maintien (24) pénètrent dans la couche isolante (14) et puissent s'accrocher à la couche de fixation (17) flexible.

4. Panneau isolant (11) selon l'une des revendications 1 à 2, sachant que le premier matériau de fibre est ignifugeant ou ininflammable et le panneau isolant (11) est exempt de retardateurs de flamme supplémentaires.

5. Panneau isolant (11) selon l'une des revendications 1 à 4, sachant que la couche isolante (14) et la couche de fixation (17) sont reliées entre elles au niveau d'une pluralité d'emplacements de liaison en forme de point ou de ligne.

6. Panneau isolant (11) selon l'une des revendications 1 à 5, sachant qu'entre la couche isolante (14) et la couche de fixation (17) est disposée une couche flexible supplémentaire, en particulier un pare-humidité, sachant que la couche flexible supplémentaire et la couche de fixation (17) sont conjointement agrafées à la couche isolante (14) ou cousues avec la couche isolante (14).

7. Panneau isolant (11) selon l'une des revendications 1 à 6, sachant que la couche isolante (14) est composée d'une pluralité de bandes isolantes (16) disposées les unes à côté des autres, lesquelles sont reliées entre elles via la couche de fixation (17).

8. Panneau isolant (11) selon l'une des revendications 1 à 7, sachant que la couche de fixation (17) dépasse de la couche isolante (14) dans au moins une zone de bord (22) du panneau isolant (11), sachant que la zone de bord (22) qui dépasse est configurée pour former une liaison autoagrippante avec un panneau isolant (11) adjacent de même type.

9. Système d'échangeur de chaleur (10, 20), comprenant :
- un panneau isolant (11), comprenant une couche isolante (14) composée d'un premier matériau de fibre et une couche de fixation (17) flexible fixée au premier matériau de fibre de la couche isolante (14) ; et
- au moins un agencement de tubes (12) disposé sur la couche de fixation (17) flexible, destiné à faire passer un fluide pour le refroidissement et/ou le chauffage, sachant que l'agencement de tubes (12) est relié directement à la couche de fixation (17) flexible moyennant des éléments de liaison, sachant que
- la couche de fixation (17) comprend un deuxième matériau et est agrafée à la couche isolante (14) ou cousue, torsadée ou tressée avec la couche isolante (14) au niveau d'une pluralité d'emplacements de liaison en forme de point ou de ligne, et
- la couche de fixation (17) flexible est constituée comme voile autoagrippant et les éléments de liaison sont constitués comme éléments autoagrippants (19) entourant du moins par sections l'agencement de tubes (12) de telle sorte que les éléments autoagrippants (19) établissent une liaison autoagrippante détachable avec le voile autoagrippant par pression de l'agencement de tubes (12) .

10. Système d'échangeur de chaleur (10, 20) selon la revendication 9, sachant que la couche isolante (14) est composée essentiellement de laine minérale, de laine de roche et/ou de laine de bois.

11. Système d'échangeur de chaleur (20) selon l'une des revendications 9 à 10, sachant que la couche de fixation (17) flexible présente une plus grande résistance que la couche isolante (14), et les éléments de liaison sont constitués comme clips de maintien (24) avec au moins un crochet, sachant que les crochets pénètrent dans la couche isolante (14) et sont accrochés derrière la couche de fixation (17).

12. Système d'échangeur de chaleur (20) selon l'une des revendications 9 à 11, sachant qu'entre la couche isolante (14) et la couche de fixation (17) flexible est disposée une couche flexible supplémentaire, en particulier un pare-humidité, sachant que la couche isolante (14), la couche flexible supplémentaire et la couche de fixation (17) flexible sont reliées entre elles au niveau d'une pluralité d'emplacements de liaison en forme de point ou de ligne.
